# EUROPEAN PATENT SPECIFICATION

(11) **EP 4 705 059 B1**
(45) Date of publication and mention of the grant of the patent: **04.11.2026**
(21) Application number: 23736226.4
(22) Date of filing: 16.06.2023
(51) Int. Cl.: B25J 5/00, B25J 5/04, B25J 9/00, B25J 9/04, B25J 13/08, B25J 19/00, B25J 19/02, B25J 19/06

(54) **STABILIZATION SYSTEM FOR ROBOTIC VEHICLE WITH TIP-OVER PROTECTION**
STABILISIERUNGSSYSTEM FÜR ROBOTERFAHRZEUG MIT KIPPSCHUTZ
SYSTÈME DE STABILISATION POUR VÉHICULE ROBOTIQUE À PROTECTION CONTRE LE BASCULEMENT

(43) Date of publication of application: 11.03.2026
(73) Proprietor: Ceske vysoke uceni technicke v Praze, 160 00 Praha 6 - Dejvice (CZ)
(72) Inventor: DENK, Petr, 160 00 Praha 6 (CZ); HAVRAN, Vlastimil, 147 00 Praha 4 (CZ); HOSEK, Jan, 251 01 Rícany (CZ)
(74) Representative: Kratochvil, Vaclav
(86) International application number: PCT/CZ2023/000030
(87) International publication number: WO 2024/255936

(56) References cited:
- WO-A1-2022/176095
- CN-U- 215 968 588
- JP-A- H 054 177
- US-A1- 2021 189 747

## Description

### TECHNICAL FIELD

The invention relates to a stabilization system for mobile devices on platforms with robotic manipulators, i.e., especially to manipulation robotic vehicles that include at least, and conveniently, three extendable outriggers, used for extending the working range of the robotic manipulator based on its workload and shifts of the center of mass of the device as a whole, optionally including an end effector connected to the robotic manipulator. By moving the extendable outriggers away from the center of the mobile device, usually a robotic vehicle, a safe area is defined. The safe area defines a space, within which the center of mass of the vehicle can be located without the vehicle tipping over or disrupting the stability needed to perform the required operations.

The system includes elements and means for defining a theoretical 3D model of the center of mass, determined by all parts of the entire device, with the stipulation that it based on the 2D projection of the position of the center of mass onto a stabilization pattern given by the geometric position of the outriggers, resting against the ground at the ground level for simultaneous and planned settings of all positionable parts of the device, including the robotic manipulator, and for verifying and comparing the calculated value of the center of mass and its 2D projection onto the plane of the stabilization pattern in relation to the position of the center of mass. The system therefore also works proactively, i.e., it is able to use the detected data for predicting whether the requested position of the end effector on the robotic manipulator will be safe. As a result of the calculation of the center of mass using the arithmetic computation unit, the device does not perform any risky movements if a dangerous or otherwise undesirable position or movement from the point of view of the required stability is detected.

Furthermore, the invention also relates to mobile devices on platforms with robotic manipulators furnished with this stabilization system, an advantage of which is a highly accurate and stable positioning of the end effector and, at the same time, a significantly extended working height of the end effector attached to the robotic manipulator in relation to the range of the vehicle base. To extend the working range, the robotic manipulator can be fastened to an additional lifting mechanism.

### BACKGROUND ART

Some solutions for ensuring the stability of platform vehicles against tipping over do already exist. One of them is the solution pursuant to document EP2772743B1, which relates to a universal system for detecting the position of the center of mass, which can accurately detect the position of the center of mass not only of a container truck, but also of various detection objects. It is equipped with a panel, on which detection objects are placed, springs that support the panel with a reaction force, an acceleration sensor for detecting a return movement of the detection objects in the up-down direction, an angular velocity sensor for detecting simple vibration movements of the detection objects around the central axis of vibration in the direction of the movement, and a limiting guiding part in the X-axis direction for limiting the movement of the panel in the X-axis direction, while the data processing device calculates the height of the center of mass in the up-down direction from the central axis of vibration in the direction of movement to the center of mass of the detection objects based on the detection results obtained from the acceleration sensor and the angular velocity sensor.

Another solution described in CN107953940A relates to an omnidirectional storage mobile stand with a gravity monitoring function, which consists of a platform frame and four sets of traveling wheels located in the lower part of the platform frame. This omnidirectional storage mobile stand with a gravity monitoring function is characterized by the use of omnidirectional travel wheels that are connected to the platform frame by an omnidirectional wheel support, with a pressure sensor installed between the omnidirectional wheel support and the platform frame. All four sets of the road wheels are equipped with motors, and these four motors can work simultaneously or independently. The pressure of the four omnidirectional wheels is measured by a pressure sensor, based on which the weight of the entire stand is calculated. However, this device, similarly to the solution above, does not allow for changing the size of the area that defines a safe position of the center of mass for performing the necessary operations of the device beyond the dimensions of the floor plan of the given device.

Another known solution, described in DE19827882A1, utilizes a method for stabilizing vehicles, particularly for preventing them from tipping over about the longitudinal axis and/or from skidding in the transverse direction, with a specified speed parameter that defines the speed of the vehicle. At least two vehicle speed limit values are determined. One of the limit values is selected as a comparison parameter, usually as a comparison parameter with the smaller value. Depending on the speed and comparison parameters, a comparison is made, based on which necessary measures are applied to stabilize the vehicle, especially when the speed parameter is greater than the comparison parameter, using at least the retarder and/or motor and/or braking on at least one of the wheels. The vehicle speed is reduced to such a degree that the speed parameter resulting from these measures is less than or equal to the comparison parameter. Individual operations are preferably performed pursuant to the difference between the speed parameter and the comparison parameter. This solution only aims to prevent the vehicle from tipping over, but it does not contain any active elements suitable for extending the operational capabilities of the vehicles. Furthermore, the solution is usually suitable only for vehicles with a weight that is significantly greater than the weight of the vehicles considered in the invention in question.

The solution pursuant to US2017259811A1 addresses devices utilized for the movement of people, particularly control systems of vehicles that are subject to stricter safety and reliability requirements. The subject of the solution is supposed to be a reliable, light, and stable movement device that is able to automatically react to situations that affected users normally encounter, such as obstacles in the path, slippery surfaces, tipping over and component failures. The solution includes an active stabilization processor that estimates the position of the center of mass of moving devices, with the stipulation that the active stabilization processor estimates at least one value associated with the moving device, needed for maintaining its balance based on the estimated center of mass, while the power base processor actively balances the moving device on at least two wheels based on at least one value. Once again, this solution does not contain any active elements for extending the operating range by adjusting the size of the stabilization frame.

The document CN215968588U discloses a stabilization system according to the preamble of claim 1.

The documents WO2022/176095A1, US2021/189747A1 and JPH054177A also form part of the prior art.

### SUMMARY OF THE INVENTION

The invention relates to a stabilization system for mobile devices on platforms with a robotic manipulator.

The system includes at least, and conveniently, three outriggers, which are advantageously detachable to ensure easy handling of the vehicle and its passage through the working environment. These outriggers can be positioned with the help of actuators, both vertically with respect to the terrain, and also along the horizontal plane using horizontal extension mechanisms, which means that the working range of the robotic manipulator can be extended by moving these mechanisms away from the center of the device based on the given load and the change of the position of the center of mass of the entire device. By moving the outriggers away from the center of the mobile device, usually a robotic vehicle, a safe area, within which the center of mass of the vehicle can be located without the vehicle tipping over, is defined. To monitor the force, with which the outrigger touches the ground, each outrigger is equipped with a tensometric force sensor in the direction of the outrigger axis, which is decisive for the calculation (calibration) of the theoretical 3D model of the center of mass position.

The system also includes a two-axis inclinometer for determining the direction of the gravitational force vector relative to the system.

Furthermore, the system includes an arithmetic computation unit that controls the positioning of the outriggers using actuators and horizontal extension mechanisms. The arithmetic computation unit is further adapted for controlling the robotic manipulator, which contains its own actuators, and ensures monitoring of the information related to the magnitude of the forces obtained from the tensometric sensors in the outriggers.

In the arithmetic computation unit, a theoretical 3D model of the position of the center of mass given by all parts of the entire device is calculated by its 2D projection onto a stabilization pattern given by the current geometric positions of the outriggers resting against the ground at the ground level for the simultaneous and planned settings of all positionable parts of the device, including the robotic manipulator, and for verification and comparison of the value of the center of mass determined by the calculation and its 2D projection onto the plane of the stabilization pattern in relation to the position of the center of mass determined from the values measured by the tensometric sensors, which allows for ensuring stability against tipping over for the planned position, including all intermediate positions during the movement from the current to the future position of the device with the possible inclusion of the effects of inertia forces, as well as system autocalibration for retroactive determination of the position of the center of mass of the entire device.

The technical effect arising from the data obtained from the tensometric sensors processed by the arithmetic computation unit is the verification of the device safety, ensuring, among other things, that the device does not tip over or that there is no unwanted movement on the end effector, while the quality of the performed operations of the end effector significantly improves and considerable volume of time is saved when operating the device, which also saves the energy needed to perform the movements of the robotic manipulator, which extends the working time of the device when powered from an accumulator.

The use of the system in further description is particularly considered for devices with a square or rectangular platform floor plan, with the stipulation that the use of the system pursuant to this invention is not limited by this fact in any way.

The system conveniently uses precisely three outriggers, the supporting parts of which are adapted for being temporarily mounted beyond the ground plan of the device platform, with the stipulation that one of the outriggers is adapted for a stationary fixation to the platform using, for example, a fixed arm, while this conveniently detachable fixed outrigger is designed to be placed as far from the robotic manipulator as possible, usually on the back site of the device, i.e., it is a fixed outrigger that is not equipped with a horizontal extension mechanism, while the other two extendable outriggers are adapted for being mounted on the platform near the vertices of the device platform closer to the robotic manipulator, i.e., usually in the corners of the platform on the opposite side of the device in relation to the fixed outrigger, each of these two outriggers being furnished with a horizontal extension mechanism, to which it is conveniently detachably fastened. Because of the robustness and rigidity of the outriggers, these horizontal extension mechanisms are adapted for being firmly mounted on the device platform in the same plane to maintain a low center of mass and identical input parameters for calculating a theoretical model of the center of mass position. They can be conveniently mounted into the sandwich structure of the platform. These horizontal extension mechanisms are used for defining the working space of the center of mass position of the device in such a way that the outriggers define a stabilization pattern, which is, in the case of three outriggers, a triangle, inside of which there must be a point given by the projection from the center of mass of the device in the direction of the gravitational force vector.

The use of more than three outriggers is not convenient due to the additional load on the device and more complicated operational and computing condition. Three outriggers in the geometric configuration of a general triangle were found to be an optimal number in terms of achieving the desired effect of the system.

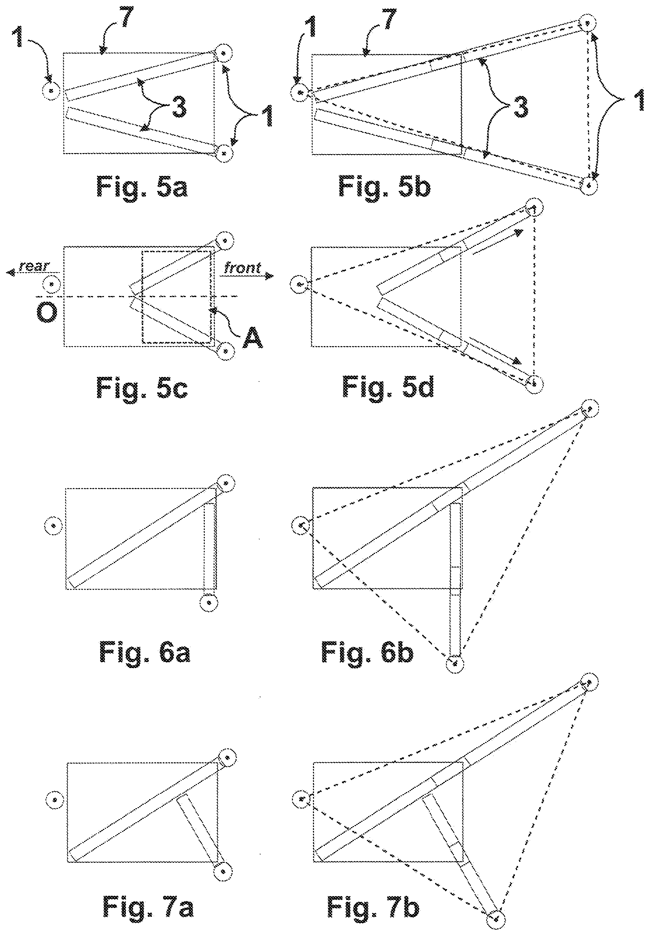

In the preferred design illustrated on Fig. 5a through Fig. 5d, these sliding outriggers with their horizontal extension mechanisms are mounted symmetrically to each other in relation to the longitudinal axis of the device and these extension mechanisms can be of the same length, with the stipulation that their deviation in the direction away from the center of the device is limited by their length, which depends on the angle between these horizontal extension mechanisms. Fig. 5a and Fig. 5b show a variant with horizontal extension mechanisms with a maximum outrigger length, but with a reduced mutual deviation, while Fig. 5c and Fig. 5d show a variant with shortened horizontal extension mechanisms, but with a greater mutual deviation, which allows for a greater lateral displacement of the center of mass of the device, but with a smaller working space in the forward direction. Fig. 5c shows the movement direction of the device and the placement area of the robotic manipulator. The sliding outriggers are oriented on the side of the platform closer to the robotic manipulator mounting area, which is considered to be the front side of the vehicle, while the fixed outrigger is fastened to the rear side of the platform. Fig. 5d shows the direction of the outrigger extension.

In the second preferred design illustrated on Fig. 6a and Fig. 6b, the sliding outriggers are of mutually different lengths, while the horizontal extension mechanism of the longer sliding outrigger, which ensures a maximum extension, is adapted for diagonal mounting on the platform in such a way that its end, opposite to the mounting point of the outrigger, reaches to the rear part of the device where the fixed outrigger is mounted, and the horizontal extension mechanism of the shorter sliding outrigger is adapted for transverse mounting on the platform in such a way that its end, opposite to the mounting point of the outrigger, reaches the mounting point of the longer sliding outrigger when this mechanism is turned perpendicular to the longitudinal axis of the device. Fig. 6b shows the horizontal extension mechanisms of the outriggers in their maximum extension, while Fig. 6a shows the outriggers in a position as close to the platform as possible.

In the third preferred design illustrated on Fig. 7a and Fig. 7b, the sliding outriggers are of mutually different lengths, with the difference from the previous variant consisting in the fact that the shorter horizontal sliding mechanism is placed approximately perpendicular to the longer horizontal mechanism. Fig. 7b shows the horizontal extension mechanisms of the outriggers in their maximum extension, while Fig. 7a shows the outriggers in a position as close to the frame as possible, which is particularly convenient when the device platform moves within a limited space.

The system conveniently includes a counterweight to stabilize the device and to compensate for the forces created by the deviation of the robotic manipulator and/or by the additional load from the end effector, which is mounted in the end part of the robotic manipulator, and this counterweight is adapted for being put on the device platform or stand as far as possible from the mounting location of the robotic manipulator, which is mainly responsible for shifting the position of the center of mass due to a change in the position of the end effector or of the robotic manipulator and/or the load on these device elements.

Furthermore, the system also conveniently includes an accelerometer for capturing the effect of external vibration excitation on the end effector and for calculating the dynamic effects of the movements performed by the device, while the accelerometer is conveniently adapted for being mounted in the end part of the robotic manipulator, i.e., in a close proximity of the connection point of the end effector,

Moreover, the invention also conveniently relates to mobile devices on platforms with a robotic manipulator furnished with this stabilization system, the advantage of which is highly accurate positioning and vibration stability of the end effector and, at the same time, in relation to the dimensions of the vehicle base, a significantly extended working height of the end effector fastened to the robotic manipulator, as well as the distance of the end effector from the device center.

It was found that the stabilization system in question significantly improves the characteristics of mobile devices with robotic manipulators from the perspective of their use, especially when these mobile devices are designed for precise and stable manipulation with end effectors with a high working range of several meters, and which can be used in indoor as well as outdoor environments. For these purposes, the mobile device can be equipped with an additional lifting mechanism, for example, a lifting post, on which a robotic manipulator with an end effector is fastened, which extends its operating range. The main advantages of devices equipped with a stabilization system pursuant to this invention lie in the fulfillment of the following requirements/criteria:
- high accuracy of the end effector positioning process within a general space due to the possibility of using a supporting extension system that ensures an extended working space for devices with small floor plan dimensions;
- good device controllability by a single operator;
- high mechanical stability during the device operation and transport;
- small dimensions for improved passability;
- safety of operators and persons/objects in the proximity of the device;
- utilization of the device battery power supply for an increased degree of energy autonomy.

As a part of the system testing, its advantages were exploited by its implementation into a mobile device for a precise positioning of the end effector, which is a light drum designed for measuring surface reflectance, and the device equipped with the system pursuant to this invention showed significant operational advantages needed to meet the desired effects within the frame of a highly precise and stable positioning of the light drum in the proximity of the device, including ensuring a high stability when measuring surfaces at heights of about 3 meters above the ground level.

The increased accuracy and reduced uncertainty of the target position of the end effector is given in this case by a serial concatenation of two or more different positioning systems into a positioning chain comprising of stabilizing outriggers, an effector positioning system consisting of a lifting column and a robotic arm, and a compensation device, demonstrating an overall higher and modifiable rigidity and mass characteristics of the currently moving parts of the positioning chain and a lower position uncertainty than a single positioning device of an equivalent working range and load capacity. The target position of the end effector is achieved by a positioning device of the highest accuracy connected in series based on the information about the current deviation of the end effector position from the target position, provided by the compensation device. An example of a compensation device is a camera connected to the end effector.

It is convenient when the robotic manipulator is a 6-axis robotic arm. Further, it is advantageous that the total weight of the device, including the stabilization system, does not exceed 900 kg. Preferably, the total weight does not exceed 500 kg. Weight limitation is particularly relevant in relation to good device controllability by a single operator.

### BRIEF DESCRIPTION OF THE DRAWINGS

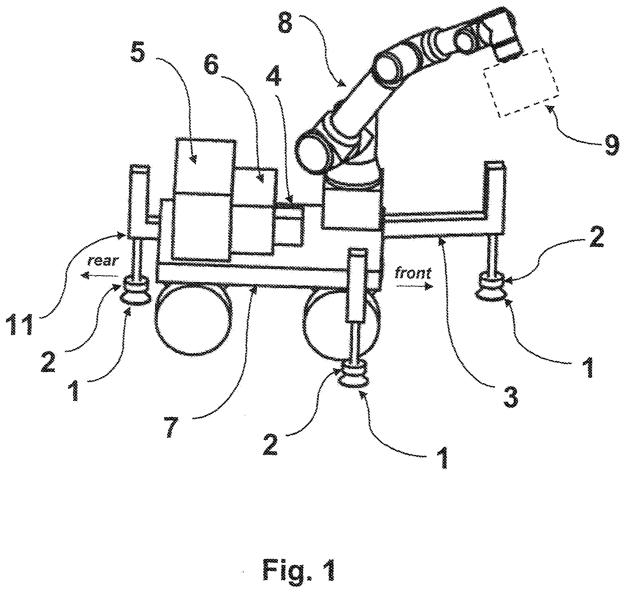

Fig. 1 shows an axonometric view of a mobile device on a platform with a robotic manipulator, which is equipped with the stabilization system pursuant to this invention, comprising of three outriggers equipped with tensometric sensors in an extended state for ensuring support against the ground, of which two outriggers are mounted in the horizontal extension mechanism attached to the front part of the device platform and one outrigger in the rear part of the device is mounted to the platform using an arm, while the figure also shows a two-axis inclinometer, an arithmetic computation unit, and a counterweight, with an indicated end effector used for fastening to the end part of the robotic manipulator;
Fig. 2 shows an axonometric view of a mobile device on a platform with a robotic manipulator as shown on Fig. 1, with the difference that the end effector on the robotic manipulator is inside of the stabilization pattern
Fig. 3 shows an axonometric view of a mobile device on a platform with a robotic manipulator as shown on Fig. 2, with the difference that the outriggers are in a raised position along the vertical axis and do not touch the ground;
Fig. 4 shows an axonometric view of a mobile device on a platform with a robotic manipulator as shown on Fig. 3, with the difference that the horizontal extension mechanism of the outriggers is in the retracted state, i.e., the outriggers are close to the device platform, which is a position suitable for moving the device in the field.
Fig. 5a shows a diagram of the mounting of the horizontal extension mechanisms on a platform in a symmetrical arrangement, with the locations of the outriggers marked, where the stationary outrigger is on one side of the platform, while the sliding outriggers are on the other side of the platform, where the connecting lines of the vertices passing through the outriggers form a triangular stabilization pattern with a minimal area;
Fig. 5b shows a diagram pursuant to Fig. 5a, with the difference that the sliding outriggers are expanded to their maximum extension, where the connecting lines of the vertices passing through the outriggers form a triangular stabilization pattern with a maximum area;
Fig. 5c shows a diagram that differs from Fig. 5a in that the horizontal extension mechanisms are shortened to achieve a greater lateral deviation of the outriggers mounted on them;
Fig. 5d shows a diagram pursuant to Fig. 5c, with the difference that the sliding outriggers are expanded to their maximum extension, where the connecting lines of the vertices passing through the outriggers form a triangular stabilization pattern with a maximum area;
Fig. 6a shows a diagram of the mounting of the horizontal extension mechanisms on a platform in an asymmetrical arrangement, where the longer horizontal extension mechanism is mounted on the platform diagonally and the second, shorter horizontal extension mechanism is mounted on the platform transversely at the edges of the front side of the platform, and it reaches to the longer horizontal extension mechanism at its opposite end to where the outrigger is mounted;
Fig. 6b shows a diagram pursuant to Fig. 6a, with the difference that the sliding outriggers are expanded to their maximum extension, where the connecting lines of the vertices passing through the outriggers form a triangular stabilization pattern with a maximum area;
Fig. 7a shows a diagram of the mounting of the horizontal extension mechanisms on a platform in an asymmetrical arrangement, where the longer horizontal extension mechanism is mounted on the platform diagonally and the second, shorter horizontal extension mechanism is mounted approximately perpendicularly to the longer horizontal extension mechanism, and it reaches to the longer horizontal extension mechanism at its opposite end to where the outrigger is mounted;
Fig. 7b shows a diagram pursuant to Fig. 6a, with the difference that the sliding outriggers are expanded to their maximum extension, where the connecting lines of the vertices passing through the outriggers form a triangular stabilization pattern with a maximum area.

### DETAILED DESCRIPTION OF THE INVENTION

The present invention is further described by the following examples, which should not be construed as limiting the scope of the invention.

### Example 1

In one implementation, the system pursuant to this invention includes three outriggers 1 for stabilizing the mobile device on platform 7 with robotic manipulator 8, where one outrigger 1 is conveniently mounted separately in arm 11 fastened to platform 7, and the other two outriggers are conveniently mounted separately to horizontal sliding mechanism 3, whereby outriggers 1 are driven by actuators for vertical positioning relative to the ground, while the actuators mounted in horizontal sliding mechanisms 3 are used for positioning in the horizontal plane. To monitor the force with which outrigger 1 touches the ground, each outrigger 1 is equipped with tensometric sensor 2 that monitors the force in the direction of the axis of outrigger 1, which is decisive for the calculation of the theoretical 3D model of the position of the center of mass of the device.

Horizontal extension mechanisms 3 of sliding outriggers 1 are adapted to be conveniently mounted in the sandwich structure of the platform with one of their ends in the retracted state in the corners on the same side of platform 7 so that outriggers 1 in the retracted state are located in a close proximity of the corner of platform 7.

Furthermore, to make the model for determining the position of the center of mass more precise, the system includes two-axis inclinometer 4, which defines the direction of the gravitational force vector in relation to the system.

Furthermore, the system includes arithmetic computation unit 6 for controlling the positioning process of outriggers 1 using actuators and horizontal extension mechanisms 3. Arithmetic computation unit 6 is further adapted for controlling robotic manipulator 8 with its own actuators, which is mounted in area A in the front part of the platform, and the unit also monitors the information about the magnitude of the forces obtained from tensometric sensors 2 in outriggers 1.

Arithmetic computation unit 6 is configured to calculate a theoretical 3D model of the center of mass position given by all parts of the entire device by its 2D projection onto a stabilization pattern, given by the geometric positions of outriggers 1 resting against the ground at the ground level, for the simultaneous and planned settings of all positionable parts of the device, including the robotic manipulator, and for verifying and comparing the value of the center of mass determined by calculation and its 2D projection onto the plane of the stabilization pattern in relation to the position of the center of mass determined from the values obtained from tensometric sensors 2, which allows for ensuring stability of the planned position against tipping over, including all intermediate positions when moving from the device current to future position, while accounting for possible effects of inertial forces, as well as auto-calibration of the system to determine the center of mass of the entire device by measurements instead of calculation.

### Example 2

System pursuant to example 1 and to the diagrams on Fig. 5a through 5d, where sliding outriggers 1 with horizontal extension mechanisms 3 are adapted for being mounted symmetrically to each other in relation to longitudinal axis O of device platform 7, while extension mechanisms 3 are of the same length, with the stipulation that in one implementation pursuant to Fig. 5a and Fig. 5b, horizontal extension mechanisms 3 have a maximum length and a reduced mutual deviation, while in the variant implemented pursuant to Fig. 5c and Fig. 5d, horizontal extension mechanisms 3 form a greater angle between each other, which allows for a greater lateral shift of the center of mass of the device, but provides for a smaller working space in the forward direction.

### Example 3

System pursuant to example 1 and to the diagrams on Fig. 6a and Fig. 6b, where sliding outriggers 1 have mutually different lengths, while horizontal extension mechanism 3 of longer sliding outrigger 1, which ensures a maximum extension, is adapted to be mounted diagonally on platform 7, so that it reaches, with its end opposite to the mounting location of outrigger 1, to the rear part of device platform 7, where fixed outrigger 1 is mounted, and horizontal extension mechanism 3 of shorter sliding outrigger 1 is adapted to be mounted on platform 7 transversely, so that its end opposite to the mounting location of outrigger 1 reaches up to the mounting location of longer sliding outrigger 1 when mechanism 3 is rotated in a way that it is perpendicular to the longitudinal axis of device platform 7.

### Example 4

System pursuant to example 1 and to the diagrams on Fig. 7a and Fig. 7b, where sliding outriggers 1 are of mutually different lengths, with the difference from the previous example 3 that shorter horizontal sliding mechanism 3 is adapted for being mounted approximately perpendicularly to longer horizontal mechanism 3.

### Example 5

System pursuant to any of the previous examples conveniently includes counterweight 5 for stabilizing the device and for compensating the forces generated by the deviation of robotic manipulator 8 and/or the additional load from end effector 9, which is mounted in the end part of robotic manipulator 8, while counterweight 5 is adapted for being mounted on platform 7 or the device stand as far as possible from the mounting location of robotic manipulator 8, which is mainly responsible for shifting the position of the center of mass due to the change of the position of end effector 9 or of robotic manipulator 8 and/or the load on these device elements.

### Example 6

System pursuant to any of the previous examples conveniently includes an accelerometer for capturing the effects of external vibration on end effector 9 and for calculating the dynamic effects of the movements performed by the device, the accelerometer being advantageously adapted for being mounted in the end part of robotic manipulator 8, i.e., in a close proximity of the connection point of end effector 9.

### Example 7

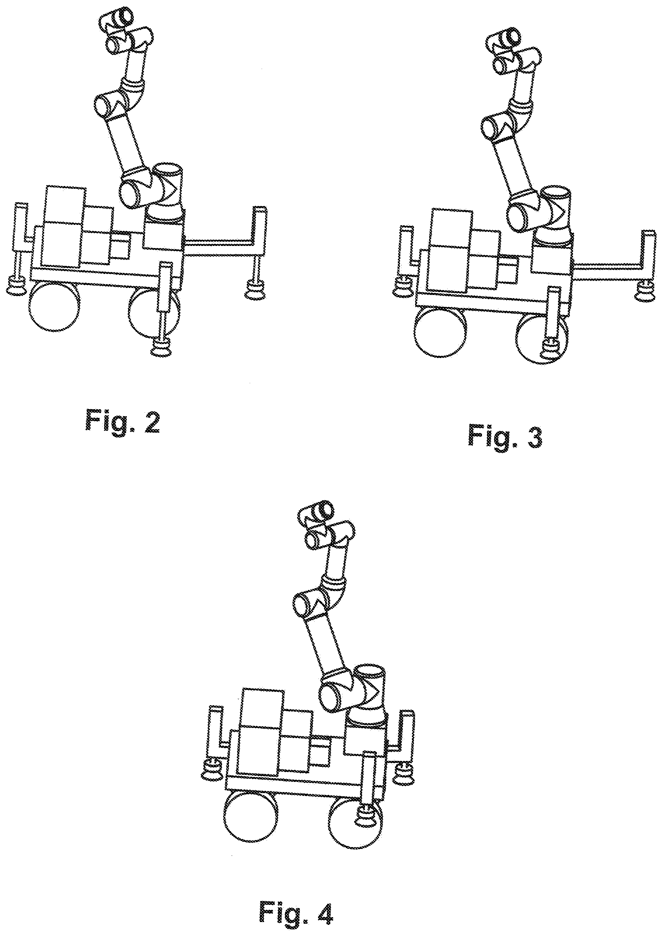

A mobile device pursuant to Fig. 1 through 4 on platform 7 with robotic manipulator 8 equipped with a stabilization system pursuant to any of the previous examples, adapted for high-precision positioning of end effector 9 and, in relation to the dimensions of platform 7 of the device, or vehicle, with a significantly extended working height of end effector 9 attached to robotic manipulator 8 as well as of the distance of the end effector from the device center.

### Example 8

Mobile device pursuant to example 7, where robotic manipulator 8 is a 6-axis robotic arm, end effector 9 is a light drum [EP3548873] designed for measuring surface reflectance and weighing approximately 14 kg, and the total weight of the device, including the stabilization system, does not exceed 280 kg, while robotic manipulator 8 is fastened to platform 7 using a lifting mechanism that extends the operating range of end effector 9, while the total range of end effector 9 is 3,190 mm above the ground level, while maintaining its great stability.

To increase the device passability, the width of platform 7, including the fastened sliding outriggers 1, is 590 mm and the minimum length of the device, including the fixed outrigger, does not exceed 880 mm in order to ensure the ability of the device to be transported by elevator systems, while the length of the platform without fixed outrigger 1 is 780 mm. The Universal robots UR16E model, currently available on the market, was chosen as the 6-axis robotic arm. The light drum has been additionally equipped with two regular RGB cameras pointing slightly off axis in the direction of the light drum axis, one depth camera and three illumination units that are strong enough for flash lighting, in order to achieve better data collection planning, spatial magnification from a small, measured sample. The device is equipped with a battery for powering all electronic elements of the device.

The direction of the gravitational force vector in relation to the mobile device platform coordinate system is obtained from the inclinometer. We calculate the position of the center of mass for individual cases of the movement of the robotic arm from the initial to the final position. Next, each planned movement position of the robotic arm is assessed from the stability perspective. The predicted ground contact forces are monitored using tensometric sensors, mounted in all outriggers. Should the permitted deviation of the force obtained from the computation model and the data measured on any tensometric sensor in the outriggers, which is usually set at 5 percent, be exceeded, the planned movement of the device is not carried out or is immediately suspended.

### INDUSTRIAL UTILIZATION

The system according to this invention is industrially utilizable by implementation in mobile devices equipped with a robotic manipulator to extend the working range and safely stabilize the device before or when performing high-precision tasks at a greater distance from the ground or center of the device or under increased load on the end effector.

### LIST OF REFERENCE MARKS

- 1: - outrigger
- 11: - outrigger arm
- 2: - tensometric sensor
- 3: - horizontal extension mechanism
- 4: - two-axis inclinometer
- 5: - counterweight
- 6: - arithmetic computation unit
- 7: - mobile device platform
- 8: - robotic manipulator
- 9: - end effector
- A: - mounting area of the robotic manipulator
- O: - longitudinal axis of the platform

## Claims

1. Stabilization system for robotic vehicles that provides protection against tipping over, where the robotic vehicle is equipped with robotic manipulator (8) on platform (7), wherein the system comprises:
- at least three outriggers (1) for expanding the working range of the robotic manipulator (8) based on the degree of the load it is exposed to and the shift of the center of mass of the robotic vehicle and its other parts that form the device as a whole with it, where each outrigger (1) is adapted for positioning along the vertical axis in relation to the ground, **characterised in that**
each of these outriggers (1) contains its own tensometric sensor (2) for measuring the force against the ground in the direction of the outrigger axis (1) for calculating a theoretical 3D model of the position of the center of mass of the device, while at least two outriggers (1) are positionable in the horizontal plane using a horizontal extension mechanisms (3);
- arithmetic computation unit (6) for controlling the positioning of the outriggers (1) and horizontal extension mechanisms (3), while the arithmetic computation unit (6) is further adapted for controlling the robotic manipulator (8), containing its own actuators, and for monitoring the information about the magnitude of forces from the tensometric sensors (2) in the outriggers (1), while the arithmetic computation unit is configured for calculating a theoretical 3D model of the center of mass position given by all parts of the entire device by its 2D projection onto the stabilization pattern given by the current geometric position of the outriggers (1) resting against the ground at the ground level for the current and planned settings of all positionable parts of the device, including the robotic manipulator (8), and is further configured for verifying and comparing the value of the center of mass determined by calculation and its 2D projection onto the plane of the stabilization pattern in relation to the position of the center of mass determined from the values measured by the tensometric sensors (2) for ensuring stability against tipping over for the planned position, including all intermediate positions when moving from the current to the future position of the device, with the possible inclusion of the effects of inertial forces, and, at the same time, auto-calibration of the system for determining the position of the center of mass of the entire device, and a two-axis inclinometer (4) for determining the direction of the gravitational force vector within the device coordinate system.

2. . Stabilization system according to claim 1, **characterized in that** it includes exactly three outriggers (1), the supporting parts of which are adapted for being temporarily mounted beyond the ground plan of the platform (7), of which one outrigger (1) is adapted for stationary fixation to the platform (7) and two sliding outriggers (1) are adapted for being mounted to the platform (7) near the robotic manipulator (8) on the opposite side of the device to the remaining outrigger (1), each of these two sliding outriggers (1) being provided with a horizontal extension mechanism (2), to which it is detachably fastened.

3. . Stabilization system according to claim 1 or 2, **characterized in that** the horizontal extension mechanisms (3) are adapted for being mounted on the platform (7) in the same plane and/or in the sandwich structure of the platform (7).

4. . Stabilization system according to claim 2 or 3, **characterized in that** the sliding outriggers (1) with their horizontal extension mechanisms (3) are adapted for being mounted symmetrically in relation to the longitudinal axis (O) of the platform (7).

5. . Stabilization system according to claim 4, **characterized in that** the horizontal extension mechanisms (3) are of the same length.

6. . Stabilization system according to claim 2 or 3, **characterized in that** the sliding outriggers (1) with their horizontal extension mechanisms (3) are adapted for being mounted in an asymmetric configuration, where one horizontal extension mechanism (3) of the sliding outriggers (1) is adapted for being mounted diagonally on the platform (7), so that its end opposite to the location of the outrigger (1) reaches the opposite part of the device platform (7) where the fixed outrigger (1) is mounted, and
- the second horizontal extension mechanism (3) of the sliding outrigger (1) is adapted for being mounted transversely on the platform (7) in such a way that its end opposite to the mounting point of the outrigger (1), when this mechanism (3) is turned perpendicular to the longitudinal axis (O) of the platform (7), reaches up to the location of the sliding outrigger (1) of the first horizontal extension mechanism (3), or
- the second horizontal extension mechanism (3) is adapted for being mounted directly to the platform (7), perpendicularly to the first horizontal extension mechanism (3), while its end opposite to the mounting point of the outrigger (1) reaches to the first horizontal extension mechanism (3).

7. . Stabilization system according to any one of claims 1 to 6, **characterized in that** it includes a counterweight (5) for stabilizing the device and compensating the forces created by the deviation of the robotic manipulator (8) and/or the additional load in an end effector (9), which is mounted in the end part of the robotic manipulator (8).

8. . Stabilization system according to any one of claims 1 to 7, **characterized in that** it includes an accelerometer for monitoring the effect of external vibration on an end effector (9) and for calculating the dynamic effects of the movements performed by the device, the accelerometer being preferably adapted for being mounted in the end part of the robotic manipulator (8) in a close proximity to the connection point of the end effector (9).

9. . Robotic vehicle with a platform (7) furnished with a robotic manipulator (8),
**characterized in that** it contains a stabilization system pursuant to any one of claims 1 to 8.

10. . Robotic vehicle according to claim 9, **characterized in that** the robotic manipulator (8) is a 6-axis robotic arm, comprising an end effector (9) being a light drum for measuring surface reflectance, and the total weight of the device, including the stabilization system, does not exceed 900 kg, while the robotic manipulator (8) is fastened to the platform (7) using a lifting mechanism, which extends the operating range of the end effector (9).

## Patentansprüche

1. Stabilisierungssystem für Roboterfahrzeuge zur Gewährleistung eines Kippschutzes, wobei das Roboterfahrzeug mit einem Robotermanipulator (8) auf einer Plattform (7) ausgestattet ist, wobei das System umfasst:
- mindestens drei Stabilisierungsstützen (1) zur Erweiterung der Arbeitsreichweite des Robotermanipulators (8) in Abhängigkeit von dem Grad der Belastung, der dieser ausgesetzt ist, sowie von der Verlagerung des Schwerpunkts des Roboterfahrzeugs und seiner weiteren Teile, die zusammen mit diesem die Vorrichtung als Ganzes bilden, wobei jede Stabilisierungsstütze (1) zur Positionierung entlang einer vertikalen Achse relativ zum Boden ausgebildet ist,
**dadurch gekennzeichnet, dass**
jede dieser Stabilisierungsstützen (1) einen eigenen Dehnungsmesssensor (2) zur Messung der in Richtung der Achse der Stabilisierungsstütze (1) auf den Boden wirkenden Kraft für die Berechnung eines theoretischen 3D-Modells der Lage des Schwerpunkts der Vorrichtung enthält, wobei mindestens zwei Stabilisierungsstützen (1) mittels horizontaler Ausfahrmechanismen (3) in einer horizontalen Ebene positionierbar sind;
- eine arithmetische Recheneinheit (6) zur Steuerung der Positionierung der Stabilisierungsstützen (1) und der horizontalen Ausfahrmechanismen (3), wobei die arithmetische Recheneinheit (6) ferner zur Steuerung des Robotermanipulators (8), der eigene Aktuatoren enthält, sowie zur Überwachung von Informationen über die Größe der von den Dehnungsmesssensoren (2) in den Stabilisierungsstützen (1) gemessenen Kräfte ausgebildet ist, wobei die arithmetische Recheneinheit dazu konfiguriert ist, ein theoretisches 3D-Modell der durch sämtliche Teile der gesamten Vorrichtung bestimmten Schwerpunktlage anhand ihrer 2D-Projektion auf die Ebene eines Stützpolygons zu berechnen, das durch die aktuelle geometrische Lage der sich am Bodenniveau auf dem Boden abstützenden Stabilisierungsstützen (1) bestimmt ist, und zwar für die aktuelle sowie die geplante Einstellung sämtlicher positionierbarer Teile der Vorrichtung einschließlich des Robotermanipulators (8), und ferner dazu konfiguriert ist, die rechnerisch bestimmte Schwerpunktlage und deren 2D-Projektion ... zu verifizieren und mit der anhand der von den Dehnungsmesssensoren (2) gemessenen Werte bestimmten Schwerpunktlage zu vergleichen, um die Kippsicherheit für die geplante Position einschließlich sämtlicher Zwischenpositionen bei der Bewegung von der aktuellen in die zukünftige Position der Vorrichtung, gegebenenfalls unter Einbeziehung der Wirkungen von Trägheitskräften, zu gewährleisten und gleichzeitig eine Selbstkalibrierung des Systems zur Bestimmung der Schwerpunktlage der gesamten Vorrichtung durchzuführen, sowie ein zweiachsiges Inklinometer (4) zur Bestimmung der Richtung des Gravitationskraftvektors im Koordinatensystem der Vorrichtung.

2. Stabilisierungssystem nach Anspruch 1, **dadurch gekennzeichnet, dass** es genau drei Stabilisierungsstützen (1) umfasst, deren Abstützabschnitte zur vorübergehenden Montage außerhalb der Grundfläche der Plattform (7) ausgebildet sind, wobei eine Stabilisierungsstütze (1) zur festen Befestigung an der Plattform (7) und zwei ausfahrbare Stabilisierungsstützen (1) zur Montage an der Plattform (7) in der Nähe des Robotermanipulators (8) auf der der verbleibenden Stabilisierungsstütze (1) gegenüberliegenden Seite der Vorrichtung ausgebildet sind, wobei jede dieser beiden ausfahrbaren Stabilisierungsstützen (1) mit einem horizontalen Ausfahrmechanismus (3) versehen ist, an dem sie lösbar befestigt ist.

3. Stabilisierungssystem nach Anspruch 1 oder 2, **dadurch gekennzeichnet, dass** die horizontalen Ausfahrmechanismen (3) zur Montage auf der Plattform (7) in derselben Ebene und/oder in einer Sandwichkonstruktion der Plattform (7) ausgebildet sind.

4. Stabilisierungssystem nach Anspruch 2 oder 3, **dadurch gekennzeichnet, dass** die ausfahrbaren Stabilisierungsstützen (1) mit ihren horizontalen Ausfahrmechanismen (3) zur symmetrischen Montage in Bezug auf die Längsachse (O) der Plattform (7) ausgebildet sind.

5. Stabilisierungssystem nach Anspruch 4, **dadurch gekennzeichnet, dass** die horizontalen Ausfahrmechanismen (3) die gleiche Länge aufweisen.

6. Stabilisierungssystem nach Anspruch 2 oder 3, **dadurch gekennzeichnet, dass** die ausfahrbaren Stabilisierungsstützen (1) mit ihren horizontalen Ausfahrmechanismen (3) zur Montage in einer asymmetrischen Anordnung ausgebildet sind, wobei ein horizontaler Ausfahrmechanismus (3) der ausfahrbaren Stabilisierungsstützen (1) zur diagonalen Montage an der Plattform (7) derart ausgebildet ist, dass sein dem Ort der Stabilisierungsstütze (1) gegenüberliegendes Ende bis zu dem gegenüberliegenden Teil der Plattform (7) der Vorrichtung reicht, an dem die feste Stabilisierungsstütze (1) montiert ist, und
- der zweite horizontale Ausfahrmechanismus (3) der ausfahrbaren Stabilisierungsstütze (1) zur Quermontage an der Plattform (7) derart ausgebildet ist, dass sein dem Befestigungsort der Stabilisierungsstütze (1) gegenüberliegendes Ende, wenn dieser Mechanismus (3) senkrecht zur Längsachse (O) der Plattform (7) ausgerichtet ist, bis zum Aufnahmeort der ausfahrbaren Stabilisierungsstütze (1) des ersten horizontalen Ausfahrmechanismus (3) reicht, oder
- der zweite horizontale Ausfahrmechanismus (3) zur direkten Montage an der Plattform (7) senkrecht zum ersten horizontalen Ausfahrmechanismus (3) ausgebildet ist, wobei sein dem Befestigungsort der Stabilisierungsstütze (1) gegenüberliegendes Ende bis zum ersten horizontalen Ausfahrmechanismus (3) reicht.

7. Stabilisierungssystem nach einem der Ansprüche 1 bis 6, **dadurch gekennzeichnet, dass** es ein Gegengewicht (5) zur Stabilisierung der Vorrichtung und zum Ausgleich der durch das Ausschwenken des Robotermanipulators (8) und/oder durch eine zusätzliche Belastung des Endeffektors (9), der am Endabschnitt des Robotermanipulators (8) befestigt ist, entstehenden Kräfte umfasst.

8. Stabilisierungssystem nach einem der Ansprüche 1 bis 7, **dadurch gekennzeichnet, dass** es einen Beschleunigungssensor zur Überwachung der Wirkung äußerer Vibrationen auf den Endeffektor (9) und zur Berechnung der dynamischen Wirkungen der von der Vorrichtung ausgeführten Bewegungen umfasst, wobei der Beschleunigungssensor vorzugsweise zur Montage am Endabschnitt des Robotermanipulators (8) in unmittelbarer Nähe der Anschlussstelle des Endeffektors (9) ausgebildet ist.

9. Roboterfahrzeug mit einer mit einem Robotermanipulator (8) ausgestatteten Plattform (7), **dadurch gekennzeichnet, dass** es ein Stabilisierungssystem nach einem der Ansprüche 1 bis 8 enthält.

10. Roboterfahrzeug nach Anspruch 9, **dadurch gekennzeichnet, dass** der Robotermanipulator (8) ein sechsachsiger Roboterarm ist, der einen Endeffektor (9) umfasst, bei dem es sich um eine Lichttrommel zur Messung des Reflexionsvermögens einer Oberfläche handelt, und dass das Gesamtgewicht der Vorrichtung einschließlich des Stabilisierungssystems 900 kg nicht überschreitet, wobei der Robotermanipulator (8) mittels eines Hubmechanismus an der Plattform (7) befestigt ist, der den Arbeitsbereich des Endeffektors (9) erweitert.

## Revendications

1. Système de stabilisation pour véhicules robotiques assurant une protection contre le renversement, le véhicule robotique étant équipé d'un manipulateur robotique (8) sur une plateforme (7), le système comprenant :
- au moins trois supports de stabilisation (1) pour étendre la plage de travail du manipulateur robotique (8) en fonction du degré de charge auquel il est soumis et du déplacement du centre de gravité du véhicule robotique et de ses autres parties, qui forment avec lui le dispositif dans son ensemble, chaque support de stabilisation (1) étant conçu pour être positionné le long d'un axe vertical par rapport au sol,
**caractérisé en ce que**
chacun de ces supports de stabilisation (1) comprend son propre capteur à jauge de contrainte (2) pour mesurer la force contre le sol dans la direction de l'axe du support de stabilisation (1) pour calculer le modèle 3D théorique de la position du centre de gravité du dispositif, au moins deux supports de stabilisation (1) étant positionnables horizontalement au moyen de mécanismes de déploiement horizontal (3) ;
- une unité de calcul arithmétique (6) pour commander le positionnement des supports de stabilisation (1) et des mécanismes de déploiement horizontal (3), l'unité de calcul arithmétique (6) étant en outre conçue pour commander un manipulateur robotique (8), qui comprend ses propres actionneurs, et pour surveiller les informations relatives à l'importance des forces provenant des capteurs à jauge de contrainte (2) dans les supports de stabilisation (1), l'unité de calcul arithmétique étant configuré pour calculer un modèle 3D théorique de la position du centre de gravité déterminé par toutes les parties de l'ensemble du dispositif au moyen de sa projection 2D dans un schéma de stabilisation défini par la position géométrique actuelle des supports de stabilisation (1) reposant sur le sol au niveau du sol pour un réglage simultané et planifié de toutes les parties positionnables du dispositif, y compris le manipulateur robotique (8), et est en outre configuré pour vérifier et comparer les valeurs du centre de gravité déterminée par le calcul et par sa projection 2D dans le plan du schéma de stabilisation par rapport à la position du centre de gravité déterminée à partir des valeurs mesurées par les capteurs à jauge de contrainte (2) pour assurer la stabilité contre le renversement pour la position prévue, y compris toutes les positions intermédiaires lors du déplacement de la position actuelle vers la position future du dispositif, avec, le cas échéant, la prise en compte des effets des forces d'inertie, et en même temps pour l'auto-étalonnage du système destiné à déterminer la position du centre de gravité de l'ensemble du dispositif, ainsi qu'un inclinomètre à deux axes (4) destiné à déterminer la direction du vecteur de la force gravitationnelle dans le système de coordonnées du dispositif.

2. Système de stabilisation selon la revendication 1, **caractérisé en ce qu'**il comprend précisément trois supports de stabilisation (1), dont les parties d'appui sont conçues pour être montées temporairement à l'extérieur du plan de la plateforme (7), un support de stabilisation (1) étant conçu pour être fixé à la plate-forme (7) et deux supports de stabilisation rétractables (1) sont conçus pour être montés sur la plateforme (7) à proximité du manipulateur robotique (8), sur le côté opposé du dispositif par rapport au support de stabilisation (1) restant, chacun des deux supports de stabilisation (1) rétractables étant équipé d'un mécanisme de déploiement horizontal (3), auquel il est fixé de manière amovible.

3. Système de stabilisation selon la revendication 1 ou 2, **caractérisé en ce que** les mécanismes de déploiement horizontal (3) sont conçus pour être montés sur la plateforme (7) dans le même plan et/ou dans la structure sandwich de la plateforme (7).

4. Système de stabilisation selon la revendication 2 ou 3, **caractérisé en ce que** les supports de stabilisation rétractables (1) avec leurs mécanismes de déploiement horizontal (3) sont conçus pour un montage symétrique par rapport à l'axe longitudinal (O) de la plateforme (7).

5. Système de stabilisation selon la revendication 4, **caractérisé en ce que** les mécanismes de déploiement horizontal (3) ont la même longueur.

6. Système de stabilisation selon la revendication 2 ou 3, **caractérisé en ce que** les supports de stabilisation rétractables (1) et leurs mécanismes de déploiement horizontal (3) sont conçus pour être montés selon une configuration asymétrique, un mécanisme de déploiement horizontal (3) des supports de stabilisation rétractables (1) étant conçu pour être monté en diagonale sur la plateforme (7) de manière que son extrémité opposée à l'emplacement du support de stabilisation (1) atteigne la partie opposée de la plateforme (7) du dispositif, où un support de stabilisation fixe (1) est monté, et
- un second mécanisme de déploiement horizontal (3) du support de stabilisation rétractable (1) est conçu pour être monté transversalement à la plateforme (7) de telle sorte que son extrémité opposée au point de fixation du support de stabilisation (1), lorsque ce mécanisme (3) est orienté perpendiculairement à l'axe longitudinal (O) de la plateforme (7), atteigne le point de montage du support de stabilisation rétractable (1) du premier mécanisme de déploiement horizontal (3), ou
- le second mécanisme de déploiement horizontal (3) est conçu pour être monté directement sur la plateforme (7) perpendiculairement au premier mécanisme de déploiement horizontal (3), son extrémité opposée au point de fixation du support de stabilisation (1) atteignant le premier mécanisme de déploiement horizontal (3).

7. Système de stabilisation selon l'une quelconque des revendications 1 à 6, **caractérisé en ce qu'**il comprend un contrepoids (5) destiné à stabiliser le dispositif et à compenser les forces résultant de la déviation du manipulateur robotique (8) et/ou de la charge supplémentaire de l'effecteur terminal (9) fixé dans la partie terminale du manipulateur robotique (8).

8. Système de stabilisation selon l'une quelconque des revendications 1 à 7, **caractérisé en ce qu'**il comprend un accéléromètre pour surveiller l'effet des vibrations externes sur l'effecteur terminal (9) et pour calculer les effets dynamiques des mouvements effectués par le dispositif, l'accéléromètre étant avantageusement conçu pour être monté dans la partie terminale du manipulateur robotique (8) à proximité immédiate du point de connexion de l'effecteur terminal (9).

9. Véhicule robotique doté d'une plateforme (7) équipée d'un manipulateur robotique (8), **caractérisé en ce qu'**il comprend un système de stabilisation selon l'une des revendications 1 à 8.

10. Véhicule robotique selon la revendication 9, **caractérisé en ce que** le manipulateur robotique (8) est un bras robotique à six axes comprenant un effecteur terminal (9), qui est un tambour lumineux destiné à mesurer la réflectivité d'une surface, et le poids total du dispositif, y compris le système de stabilisation, ne dépasse pas 900 kg, le manipulateur robotique (8) étant fixé à la plateforme (7) au moyen d'un mécanisme de levage qui augmente la plage opérationnelle de l'effecteur terminal (9).
